Europäisches Patentamt

European Patent Office

Office européen des brevets

(11) Veröffentlichungsnummer: **0 478 920 A1**

# (12) EUROPÄISCHE PATENTANMELDUNG

(21) Anmeldenummer: **91112677.9**

(22) Anmeldetag: **27.07.91**

(51) Int. Cl.5: **E06C 1/18**, F16B 21/18, E06C 7/50

(30) Priorität: **05.10.90 DE 4031480**

(43) Veröffentlichungstag der Anmeldung: **08.04.92 Patentblatt 92/15**

(84) Benannte Vertragsstaaten: **BE CH DE ES FR IT LI LU NL**

(71) Anmelder: **Hailo-Werk Rudolf Loh GmbH & Co. KG Industriestrasse W-6342 Haiger(DE)**

(72) Erfinder: **Behnke, Torsten Auf der Mauer 16 W-6330 Wetzlar 12 (Garbenheim)(DE)**

(74) Vertreter: **Vogel, Georg Pat.-Ing. Georg Vogel Hermann-Essig-Strasse 35 W-7141 Schwieberdingen(DE)**

(54) **Leiter mit Verbindungsmittel.**

(57) Die Erfindung betrifft eine Leiter, insbesondere Stufenstehleiter oder Stehleiter, mit gegeneinander verschwenkbaren und Öffnungen (29,30) für Steckkörper (31) von Verbindungsmitteln , z.B. Gurte, Ketten, Seile oder dgl., aufweisenden Holmen (14) aus Hohl-, Halbhohl- oder offenen Profilstücken, wobei durch die Verbindungsmittel der Winkel zwischen den gegeneinander verschwenkbaren Holmenpaaren begrenzbar ist. Die Endstücke der Steckkörper (31) sind mit in die Holme einbringbaren und elastisch verformbaren Sperrkörpern (40) versehen, die das Herausziehen der Steckkörper aus der Öffnung verhindern.

FIG.2

EP 0 478 920 A1

Die Erfindung betrifft eine Leiter nach dem Oberbegriff des Anspruches 1.

Bei Stehleitern oder Stufen-Stehleitern, die regelmäßig aus zwei Paaren gegeneinander verschwenkbaren Holmen bestehen und z.B. in der DE 89 03 906 U1 beschrieben sind, sind im mittleren Bereich der Holme Gurte, Ketten oder Seile angeordnet, durch die sichergestellt ist, daß der Schwenkwinkel zwischen den Holmen nicht einen bestimmten Betrag überschreitet. Die Verbindungsmittel sind mit den Holmen mittels Schrauben oder Nieten verbunden, was zur Folge hat, daß die Komplettierung der Leiter noch weitere Arbeitsvorgänge voraussetzt, um die Verbindungsmittel mit den Holmen betrieblich verbinden zu können.

Ausgehend von dem oben genannten Stand der Technik liegt der Erfindung die Aufgabe zugrunde, die gattungsgemäße Leiter so weiterzubilden, daß die Verbindung der Holme mit den Verbindungsmitteln deutlich einfacher und schneller erfolgen kann.

Die gestellte Aufgabe wird erfindungsgemäß durch die kennzeichnenden Merkmale des Anspruches 1 gelöst.

Man erkennt, daß die Erfindung jedenfalls dann verwirklicht ist, wenn die eigentliche Verbindung zwischen den Verbindungsmitteln und den Holmen durch eine Rastverbindung herstellbar ist, indem der Steckkörper mit Sperrkörper in die vorgefertigte Öffnung des Holmes eingesteckt wird.

Weitere zweckmäßige und vorteilhafte Ausgestaltungen der Erfindung gehen aus den Unteransprüchen hervor.

Eine besonders zweckmäßige Ausgestaltung sieht bei einer Leiter mit als Bohrungen ausgebildeten Öffnungen vor, daß die Steckkörper in den Öffnungen schwenkbar gelagert sind. Hierbei ist es zweckmäßig, wenn der Sperrkörper federnde Widerhaken aufweist. Die Widerhaken können integraler Bestandteil des Steckkörpers sein. Es besteht jedoch auch die Möglichkeit, den Sperrkörper als separates Bauteil auszubilden, das sodann mit dem Steckkörper verbunden wird.

Im Rahmen dieses Erfindungsgedankens ist es besonders zweckmäßig, wenn der Sperrkörper eine Hülse mit mindestens zwei die Widerhaken bildenden Zungen ist, die in einer Ringnut des Steckkörpers gelagert ist. Der Außendurchmesser der hohlzylindrischen Hülse entspricht hierbei dem Außendurchmesser des Steckkörpers.

Ferner sieht eine zweckmäßige Ausgestaltung der Erfindung vor, daß der Steckkörper ein im wesentlichen L-förmiger Körper ist, dessen einer Schenkel im Holm gelagert ist, während der andere Schenkel zum Holm parallel angeordnet ist.

Die Erfindung betrifft auch ein Verbindungsmittel, z.B. Gurt, Kette, Seil oder dgl. für Stehleitern mit gegeneinander verschwenkbaren Holmen aus Hohl-, Halbhohl- oder offenen Profilstücken, durch das der Winkel zwischen den gegeneinander verschwenkbaren Holmenpaaren begrenzbar ist, wobei in den Holmen Öffnungen für die Verbindungsmittel ausgebildet sind. Die freien Endstücke der Verbindungsmittel sind als in die Öffnungen einsteckbare Steckkörper mit Sperrkörpern ausgebildet, die das Herausziehen der Körper aus den Öffnungen verhindern.

Ein Ausführungsbeispiel der Erfindung ist in der Zeichnung schematisch dargestellt und wird im folgenden näher erläutert. Es zeigen

Fig. 1      eine Stehleiter in perspektivischer Seitenansicht,

Fig. 2      den mit II bezeichneten Teil der Stehleiter nach Fig. 1 vergrößert dargestellt,

Fig. 3      eine axiale Draufsicht eines Holmes mit einem Verbindungsmittel,

Fig. 4      ein Teil des Verbindungsmittels und

Fig. 5      einen Sperrkörper.

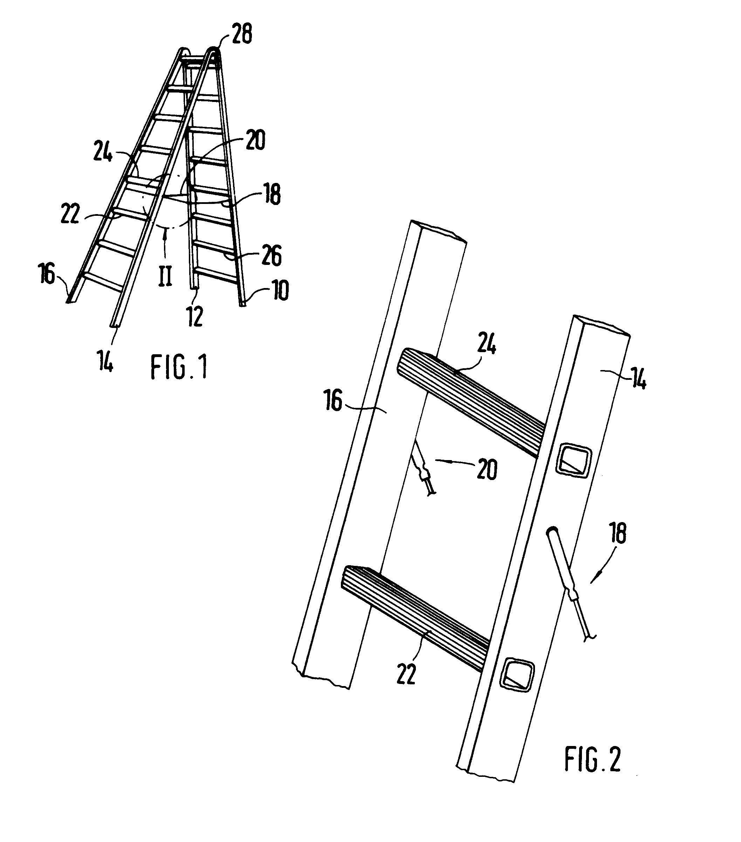

In Fig. 1 ist eine Stehleiter dargestellt, die aus zwei Paar Holmen 10 und 12 bzw. 14 und 16 mit Sprossen 22,24 und 26 besteht. Die Holmenpaare 10 und 12 bzw. 14 und 16 sind im Bereich 28 gelenkig miteinander verbunden. Der Schwenkwinkel zwischen den Holmen wird durch zwei Seile 18 und 20 begrenzt, die an den Holmen 10,12,14 und 16 angelenkt sind.

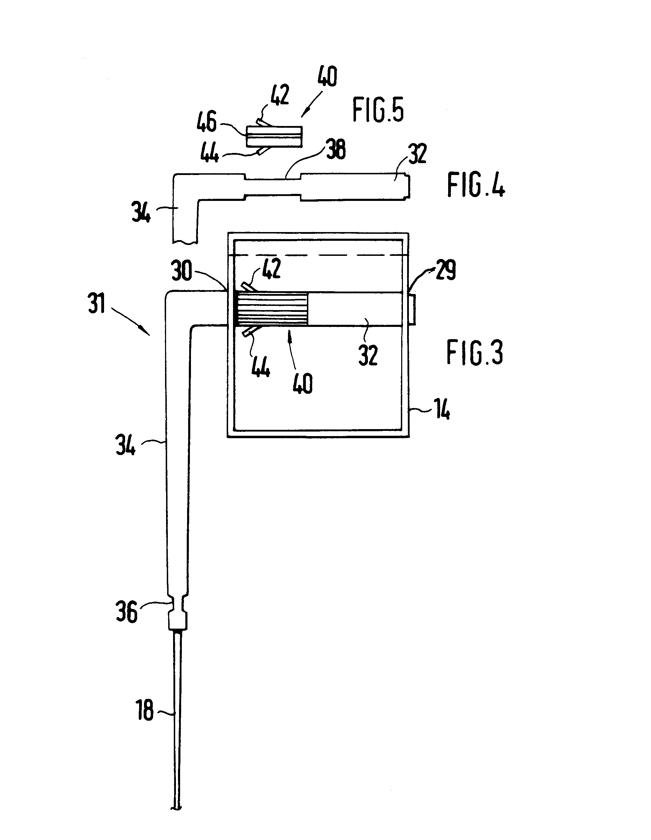

Die Fig. 3 läßt erkennen, daß der Holm 14 zwei Öffnungen 29 und 30 aufweist, in die der Steckkörper 31 mit einem Sperrkörper 40 einsteckbar ist, so daß das Herausziehen des Steckkörpers 31 aus der Öffnung 30 nicht mehr ohne weiteres möglich ist. Der Steckkörper 31 ist im wesentlichen L-förmig, wobei der Schenkel 32 den Holm 14 durchquert, während der Schenkel 34 mit geringem Abstand zum Holm 14 angeordnet ist. Der Steckkörper 31 ist in den Bohrungen 29 und 30 drehbar gelagert und hierbei so bemessen, daß er in Richtung des Schenkels 32 nicht mehr verstellbar ist. Dies ist z.B. so erreichbar, daß der Schenkel in seinem freien Endbereich eine Durchmesserverringerung besitzt und die Öffnung 29 einen Durchmesser aufweist, der ginger ist als der zentrale Abschnitt des Schenkels 32. Wenn sich der Sperrkörper 40 an der Innenseite des Holmes 14 abstützt, ist eine unverrückbare Lage des Schenkels 32 sichergestellt.

Ferner ist erkennbar (vgl. Fig. 4), daß der Schenkel 32 eine Ringnut 38 besitzt, die den Sperrkörper 40 trägt. Der Sperrkörper 40 ist als eine Hülse mit einem axialen Schlitz 46 und zwei federnden Zungen 42 und 44 ausgebildet. Der Außendurchmesser der Hülse entspricht dem Außendurchmesser des Schenkels 32 und ist kleiner als der Durchmesser der kreisrunden Bohrung 30. Der Sperrkörper 40 besteht aus elastisch verformbarem Metall, so daß beim Einstecken des Schenkels 32 in die Öffnung 30 die Zungen 42 und 44 in Richtung des Schenkels 32 gebogen werden. Hat der Steckkörper 31 die in Fig. 3 dargestellte Position eingenommen, entspannen sich die Zungen 42 und 44, so daß ein Herausziehen des Schenkels 32 aus der Bohrung 30 nicht mehr möglich ist. Da die auf der Ringnut 38 gelagerte Hülse axial unverrückbar angeordnet ist, ist es auch nicht ohne weiteres möglich, die Verbindung zwischen dem Sperrkörper 40 und dem Schenkel 32 zu lösen. Das untere Ende des Schenkels 34 besitzt eine Bohrung, in die das Seil 18 eingesteckt und im Bereich 36 eingequetscht ist.

Der tragende Gedanke der Erfindung besteht also darin, den Steckkörper 31 so auszubilden, daß die Verbindung zwischen ihm und dem Holm durch Stecken herstellbar ist. Darüberhinaus ist von Bedeutung, daß für die Herstellung der betrieblichen Verbindung keine zusätzlichen oder besonderen Werkzeuge erforderlich sind.

**Patentansprüche**

1. Leiter, insbesondere Stufenstehleiter oder Stehleiter, mit gegeneinander verschwenkbaren und Öffnungen für Steckkörper von Verbindungsmitteln , z.B. Gurte, Ketten, Seile oder dgl., aufweisenden Holmen aus Hohl-, Halbhohl- oder offenen Profilstücken, wobei durch die Verbindungsmittel der Winkel zwischen den gegeneinander verschwenkbaren Holmenpaaren begrenzbar ist,
dadurch gekennzeichnet,
daß die Endstücke der Steckkörper (31) mit in die Holme (14) einbringbaren und elastisch verformbaren Sperrkörpern (40) versehen sind, die das Herausziehen der Steckkörper (31) aus der Öffnung verhindern.

2. Leiter nach Anspruch 1 mit als Bohrungen ausgebildeten Öffnungen,
dadurch gekennzeichnet,
daß der Steckkörper (31) in der Öffnung (29,30) schwenkbar gelagert ist.

3. Leiter nach Anspruch 1 oder 2,
dadurch gekennzeichnet,
daß der Sperrkörper (40) federnde Widerhaken (42,44) aufweist.

4. Leiter nach einem der Ansprüche 1 bis 3,
dadurch gekennzeichnet,
daß der Sperrkörper (40) mit dem Steckkörper (31) lösbar verbindbar ist.

5. Leiter nach einem der Ansprüche 1 bis 4,
dadurch gekennzeichnet,
daß der Sperrkörper (40) eine Hülse mit mindestens zwei die Widerhaken bildenden Zungen ist, die in einer Ringnut (38) des Steckkörper (31) gelagert ist.

6. Leiter nach einem der Ansprüche 1 bis 5,
dadurch gekennzeichnet,
daß der Außendurchmesser der hohlzylindrischen Hülse (40) etwa dem Außendurchmesser des Steckkörpers (31) entspricht.

7. Leiter nach einem der Ansprüche 1 bis 6,
dadurch gekennzeichnet,
daß die freien Enden der federnden Zungen (42,44) mit Abstand zum Steckkörper (31) angeordnet sind.

8. Leiter nach einem der Ansprüche 1 bis 7,
dadurch gekennzeichnet,
daß der lichte Abstand der Enden der Zungen (42,44) voneinander größer ist als der Durchmesser der Öffnung (29,30).

9. Leiter nach einem der Ansprüche 1 bis 8,
dadurch gekennzeichnet,
daß sowohl der Steckkörper (31) als auch der Sperrkörper (40) aus Metall ausgebildet ist.

10. Leiter nach einem der Ansprüche 1 bis 9,
dadurch gekennzeichnet,
daß der Steckkörper (31) ein im wesentlichen L-förmiger Körper ist, dessen ein Schenkel (32) im Holm (14) gelagert ist, während der anderen Schenkel (34) annähernd abstandsfreie zum Holm (14) angeordnet ist.

11. Verbindungsmittel, z.B. Gurt, Kette, Seil oder dgl. für Leitern mit gegeneinander verschwenkbare Holmen aus Hohl-, Halbhohl- oder offenen Profilstücken, durch das der Winkel zwischen den gegeneinander verschwenkbaren Holmenpaaren begrenzbar ist, wobei in den Holmen Öffnungen für Steckkörper der Verbindungsmittel ausgebildet sind,
dadurch gekennzeichnet,
daß die Steckkörper (31) Sperrkörper (40) aufweisen, die in die Holme (14) einbringbar sind und das Herausziehen der Steckkörper (31) aus den Öffnungen (30) verhindern.

FIG.1

FIG.2

FIG.5

FIG.4

FIG.3

**Europäisches Patentamt**

# EUROPÄISCHER RECHERCHENBERICHT

Nummer der Anmeldung

**EP 91 11 2677**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | FR-A-2 546 960 (ALUFORT SA) <br> * Ansprüche 1-4; Abbildungen * * <br> – – – | 1-11 | E 06 C 1/18 <br> F 16 B 21/18 <br> E 06 C 7/50 |
| Y | FR-A-2 102 518 (D.LECUYER) <br> * Ansprüche 1-5; Abbildungen * * <br> – – – | 1-11 | |
| A | US-A-3 534 650 (C.KUBOKAWA) <br> * Spalte 3, Zeile 47 - Zeile 70; Abbildungen * * <br> – – – | 1,11 | |
| A | FR-A-2 467 964 (HYMER LEICHTMETALLBAU) <br> * Seite 5, Zeile 15 - Zeile 31; Abbildungen * * <br> – – – – – | 1 | |

| RECHERCHIERTE SACHGEBIETE (Int. Cl.5) |
|---|
| E 06 C <br> F 16 B |

**Der vorliegende Recherchenbericht wurde für alle Patentansprüche erstellt**

| Recherchenort | Abschlußdatum der Recherche | Prüfer |
|---|---|---|
| Den Haag | 24 Januar 92 | RIGHETTI R. |